# EUROPEAN PATENT SPECIFICATION

(11) **EP 0 556 166 B1**
(45) Date of publication and mention of the grant of the patent: **29.11.1995**
(21) Application number: 93830052.2
(22) Date of filing: 12.02.1993
(51) Int. Cl.: A47J 27/04, A47J 27/00

(54) **Steam oven and container to be used therein**
Dampfofen und Behälter zur Verwendung darin
Four à vapeur et récipient à utiliser dans celui-ci

(30) Priority: 14.02.1992 IT MI920313
(43) Date of publication of application: 18.08.1993
(73) Proprietor: SMEG S.p.A., Guastalla (Reggio Emilia) (IT)
(72) Inventor: Bertazzoni, Roberto, Guastalla (Reggio Emilia) (IT)
(74) Representative: Adorno, Silvano

(56) References cited:
- CH-A- 652 293
- DE-C- 19 360
- FR-A- 2 619 613

## Description

The present invention concerns a steam oven and a container to be used therein to generate steam directly inside the container itself.

It is known that domestic ovens have been recently marketed which provide for the generation of steam which may be conveyed, through a proper pipe, into a baking-pan containing the food to be cooked, by providing a little boiler or steam generator housed in a suitable position within the structure of the oven but outside its cooking space or muffle, as well as a properly located built-in water tank which may be fed from outside, for example through a partially extractable drawer.

More recently it has been found preferable to provide a mixed cooking, wherein the steam cooking is added to the oven's own cooking (of the electrical, gas- or microwave type), thus allowing for a reduction of the time required, maintaining the food soft without altering the substances thereof, reducing the condiments and therefore obtaining dietetic foods besides a greater variety of cooking compared to a conventional oven. A steam generator is positioned on the same plane of the oven bottom, with a corresponding part thereof forming the removable cover of the generator itself, thus making the tank easily accessible for maintenance and cleaning. The container to be used in this case, with its bottom and possibly its sides made of steel and a pyrex glass lid, has a central opening in the bottom properly sized for the passage of the steam thereinto. The steel bottom favours the cooking by conduction from the resistances or gas burners located on the oven bottom, the evaporator and its heating elements being positioned therebetween, while the transparent material lid lets through the radiation coming from above, for example from a grill resistance located on the oven ceiling.

It is an object of the present invention to provide a steam oven which, instead of providing a steam generator formed within the oven, utilizes as evaporator the cooking container itself, with the advantage of making easier the cleaning operation of the bottom of the oven.

Another object of the present invention is to provide a steam cooking container, to be used in the oven, capable of generating steam at its own inside, when its bottom is put in contact with proper heating elements.

These and other objects, advantages and characteristics of the improved steam oven according to the present invention and of the container to be used therein, will become apparent from the following detailed description, reported as non-limiting example, referring to the annexed drawings wherein :
Fig.1 shows an exploded view limited to the bottom area of the oven and to the related steam cooking container; and
Fig.2 shows a cross sectional view limited to the steam cooking area of the oven and to the related container, of another embodiment of the oven itself.

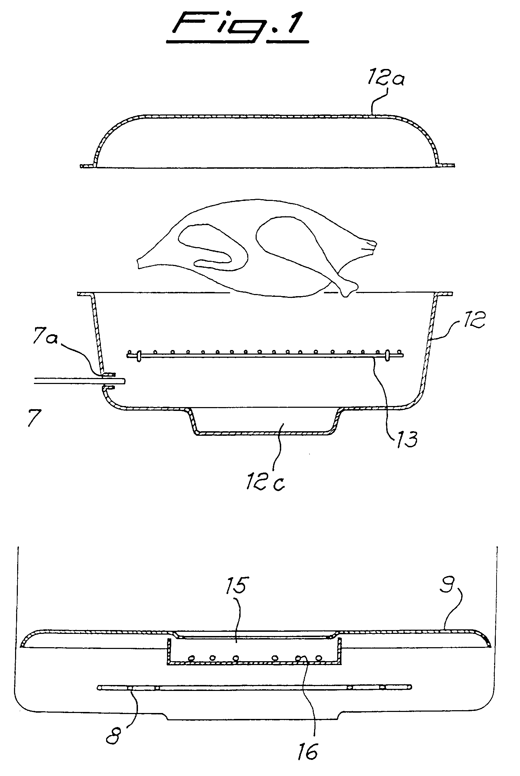

Referring to fig.1, it is shown only the bottom 9 of the oven according to the present invention with its related heating elements 8, consisting in this case of electric resistances, but which could as well consist of gas burners. In a central area free from these first heating elements 8, second heating elements 16 are provided usually consisting of electric resistances for the evaporation of the water contained in an overlying cooking container 12 according to the present invention. Said container 12 consists in a baking-pan whose bottom and preferably also the sides are made of stainless steel, while the lid 12a is preferably made of refractory glass or pyrex which is transparent to the radiation which may come from the oven ceiling, for example from a grill not shown in the drawing. In this way the cooking may be improved with a more attractive "baked" appearance of the upper part of the food.

According to this invention the bottom of the baking-pan has a deeper central area so that it forms a small tank 12c wherein the water needed for the steam cooking is gathered. Said projecting tank 12c will preferably be in contact with the heating elements 16, while the remaining part of the baking-pan bottom rests on the oven bottom 9 and receives heat by conduction from the heating elements 8. To this purpose a recess 15 for housing the projecting central part 12c of the baking-pan 12 is provided in the central area of the bottom 9.

By means of a pipe 7 passing through a hole 7a in the wall of the baking-pan 12, the water is fed from a tank (not shown) housed, for example, between a side wall of the cooking space or muffle 1 and the outer wall of the oven, said tank being fed from time to time through a water supply drawer, not shown as well. With regard to this a level gauge may be provided inside the tank indicating through a proper external signal that the level is normal or, by lighting a warning light on the front of the oven itself, that the level is too low thus indicating the need of supplying water to the tank. As already known for other types of steam ovens, the water may be thermostatically drawn from the tank through the pipe 7 into the small tank 12c by means of an electric valve, or better sent by means of an electric pump whenever the hydrostatic pressure exerted by the water column in the tank is insufficient.

A grill 13 within the baking-pan 12 acts as a support for the food to be cooked, preventing the contact of the latter with the water contained in the bottom tank 12c. The grill 13 will be preferably positioned , within the baking-pan 12, higher than the inlet hole 7a of the pipe 7. The cooking takes place due to, besides the steam convection within the baking-pan 12, the conduction from the resistances or gas burners 8 located on the oven bottom, and possibly for the radiation coming from above, passing through the transparent lid 12a.

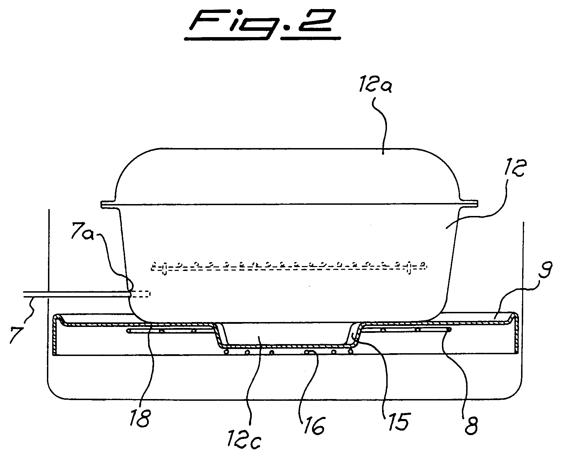

Obviously, as already provided in other known steam ovens, the generation of vapour must take place only when the temperature inside the volume 1 has reached at least 130°C in order to prevent the production of condensate on the walls of the oven itself. In this case, instead of intervening on the ignition time of the heating elements 16, which in this case require a separate control, a thermostat or timer control acts directly on the electric valve or the electric pump which allows the water through the pipe 7, also as far as the amount of water to be introduced is concerned. On the contrary, the electric water discharge device, externally controlled, is useless since with the solution according to the present invention the evaporator tank is part of the baking-pan itself and therefore it is easily cleaned during the cleaning operation of the baking-pan itself, while the heating elements 16, or the recess 15 containing them anyway, do not come at all in contact with the water and therefore, not requiring a special maintenance, do not need to be made removable. Though the resistances 16 may be manufactured, as known, so that they are not damaged by a possible contact with the water, whenever the user forgets to insert the container 12 in the oven, or the pipe 7 is incorrectly inserted into the hole 7a, any mishap of this kind may be prevented according to another embodiment shown in fig.2. In this case the bottom 9 is provided with a plate 18 shaped so that it follows the bottom also along the recess 15 corresponding to the projection 12c of the baking-pan, thus covering the resistances 16 which, therefore, will be isolated from the water in any case. Therefore the baking-pan will not be directly in contact with the resistances 16 in the central evaporation area 12c, but it will rest on the plate 18.

## Claims

1. A domestic steam oven, including a water tank and heating elements (8) in the bottom (9) of the oven itself, on the bottom of the cooking space or muffle, with a cooking container (12) having at least the bottom of stainless steel, characterized in that said container (12) is connected to said tank through a duct (7) which ends up inside the former through a hole (7a) to supply water into a central area (12c) of the bottom thereof, projecting downwards like a small tank, intended to be inserted in a corresponding housing (15) formed in said oven bottom (9) between the heating elements (8) and having further heating means (16) for the evaporation of the water contained in said central area (12c) of the container.

2. An oven according to claim 1, characterized in that it includes thermostats and/or timers suitable to control the automatic operation of an electric valve or an electric pump for the drawing or the forced sending, respectively, of measured amounts of water through the duct (7) into the container (12).

3. An oven according to claim 1 or 2, characterized in that said bottom (9) consists in a plate (18) shaped so that it forms the bottom of said housing (15), whereby it separates said heating elements (16) from the remaining parts of the oven.

4. A steam oven according to claim 1, characterized in that the steam is generated only inside the cooking container.

5. A cooking container for an oven according to any of the preceding claims, characterized in that it consists of a baking-pan (12) having at least the bottom of stainless steel and a through hole (7a) in the side wall through which a water supply pipe (7) enters, the bottom of said baking-pan (12) having a central more sunken part (12c) suitable to hold the the water supplied by said pipe (7) for its evaporation within said baking-pan provided with a lid (12a).

6. A container according to claim 5, characterized in that it comprises therein a grill (13) suitable to support the food to be cooked above said sunken part or small tank (12c).

7. A container according to claim 5 or 6, characterized in that it has a transparent lid (12a) to allow also a cooking due to radiation from above, together with the steam cooking and by heat conduction, through the bottom, from the oven bottom.

## Patentansprüche

1. Dampfofen für den Hausgebrauch, mit einem Wassertank und Heizelementen (8) in dem Boden (9) des Ofens, auf dem Boden der Kochstelle oder Muffel, mit einem Kochbehälter (12), bei dem wenigstens der Boden aus rostfreiem Stahl gefertigt ist, dadurch **gekennzeichnet**, daß der Behälter (12) über ein Rohr (7) mit dem Tank verbunden ist, wobei das Rohr in einem Loch (7a) in dem Behälter (12) endet, um Wasser in den Zentralbereich (12c) des Bodens des Behälters (12) zu liefern, wobei der Zentralbereich (12c) wie ein kleiner Tank nach unten vorsteht und zur Einführung in ein entsprechendes Gehäuse (15) vorgesehen ist, das in dem Boden (9) des Ofens zwischen den Heizelementen (8) ausgebildet ist und weitere Heizeinrichtungen (16) zum Verdampfen von Wasser aufweist, das in dem Zentralbereich (12c) des Behälters enthalten ist.

2. Ofen nach Anspruch 1, dadurch gekennzeichnet, daß er Thermostaten und/oder Zeitgeber enthält, die geeignet sind, den automatischen Betrieb eines elektrischen Ventils oder einer elektrischen Pumpe zu steuern, um abgemessene Wassermengen durch das Rohr (7) in den Container (12) jeweils zu saugen oder zu drücken.

3. Ofen nach Anspruch 1 oder 2, dadurch gekennzeichnet, daß der Boden (9) aus einer Platte (18) besteht, die so geformt ist, daß sie den Boden des Gehäuses (15) bildet, wodurch sie die Heizelemente (16) von den verbleibenden Teilen des Ofens trennt.

4. Dampfofen nach Anspruch 1, dadurch gekennzeichnet, daß der Dampf nur innerhalb des Kochbehälters erzeugt wird.

5. Kochbehälter für einen Ofen nach einem der vorhergehenden Ansprüche, dadurch gekennzeichnet, daß er aus einer Backpfanne (12) besteht, die wenigstens einen aus rostfreiem Stahl gefertigten Boden und ein Öffnungsloch (7a) in einer Seitenwand aufweist, durch das ein Wasserzufuhrrohr (7) eingeführt ist, wobei der Boden der Backpfanne (12) einen weiter abgesenkten Teil (12c) aufweist, der geeignet ist, das von dem Rohr (7) gelieferte Wasser aufzunehmen, damit es innerhalb der mit einem Deckel (12a) versehenen Backpfanne verdampft.

6. Behälter nach Anspruch 5, dadurch gekennzeichnet, daß er einen Grill (13) enthält, der geeignet ist, das zu kochende Essen oberhalb des abgesenkten Teiles oder des kleinen Tanke (12c) zu halten.

7. Container nach Anspruch 5 oder 6, dadurch gekennzeichnet, daß er einen transparenten Deckel (12a) aufweist, um auch ein Kochen aufgrund von von oben kommender Strahlung, zusammen mit einer Erhitzung durch Wasserdampf und durch Wärmeleitung von dem Boden des Ofens durch den Boden, zu ermöglichen.

## Revendications

1. Four domestique à vapeur, comportant un réservoir d'eau et des éléments de chauffage (8) dans le fond (9) lui-même, sur le fond de l'espace de cuisson ou moufle, avec un récipient de cuisson (12) dont le fond au moins est en acier inoxydable,
caractérisé en ce que le récipient (12) est relié audit réservoir par un conduit (7) qui se termine à l'intérieur dudit récipient en traversant un trou (7a) pour alimenter en eau une zone centrale (12c) de son fond faisant saillie vers le bas comme un petit réservoir, destinée à être insérée dans un logement correspondant (15) formée dans le fond (9) du four entre les éléments de chauffage (8) et comportant d'autres moyens de chauffage (16) pour assurer l'évaporation de l'eau contenue dans ladite zone centrale (12c) du récipient.

2. Four à vapeur selon la revendication 1,
caractérisé en ce qu'il comporte des thermostats et/ou des minuteries propres à commander le fonctionnement automatique d'une électrovanne ou d'une pompe électrique pour assurer l'admission ou l'envoi forcé, respectivement, de quantités mesurées d'eau dans le récipient (12) par l'intermédiaire du conduit (7).

3. Four à vapeur selon la revendication 1 ou 2,
caractérisé en ce que le fond (9) est constitué par une plaque (18) conformée de manière à former le fond dudit logement (15), en séparant ainsi lesdits éléments de chauffage (16) des parties restantes du four.

4. Four à vapeur selon la revendication 1,
caractérisé en ce que la vapeur n'est engendrée qu'à l'intérieur du récipient de cuisson.

5. Récipient de cuisson pour un four selon l'une quelconque des revendications précédentes,
caractérisé en ce qu'il est constitué par un plat à rôtir (12) dont au moins le fond est en acier inoxydable et dont la paroi latérale est traversée par un trou (7a) par lequel pénètre un conduit d'alimentation en eau (7), le fond dudit plat à rôtir (12) présentant une partie centrale plus profonde (12c) propre à retenir l'eau admise par ledit conduit (7) pour son évaporation à l'intérieur dudit plat à rôtir muni d'un couvercle (12a).

6. Récipient selon la revendication 5,
caractérisé en ce qu'il comporte intérieurement une grille (13) propre à supprimer l'aliment à cuire au-dessus de ladite partie plus profonde ou petit réceptacle (12c).

7. Récipient selon la revendication 5 ou 6,
caractérisé en ce qu'il comporte un couvercle transparent (12a) pour permettre également une cuisson par rayonnement de ce qui est au-dessus, en même temps que la cuisson à la vapeur et par conductibilité thermique, par l'intermédiaire du fond, du fond du four.
